# EUROPÄISCHE PATENTANMELDUNG

(11) **EP 2 058 996 A1**
(43) Veröffentlichungstag der Anmeldung: **13.05.2009**
(21) Anmeldenummer: 09001907.6
(22) Anmeldetag: 27.01.2006
(51) Int. Cl.: H04L 29/06

(54) **Netzwerkelement mit mindestens einer Schnittstelle, über die es mit einem zweiten Netzwerkelement verbindbar ist**

(62) Teilanmeldung aus: 06001745.6
(71) Anmelder: Siemens Aktiengesellschaft, 80333 München (DE)
(72) Erfinder: Belling, Thomas, Dr., 85435 Erding (DE)

(57) **Zusammenfassung**

Die Erfindung betrifft ein Netzwerkelement, das derart ausgestaltet ist, dass eine erste Signalisierungsnachricht erzeugbar und an der Schnittstelle abgebbar ist, mit der eine Bereitschaft zum Transport mindestens einer Nutzdatenverbindung über mindestens eine Multiplexverbindung angezeigt wird. Bei Empfang einer ersten Signalisierungsnachricht das Netzwerkelement jeder der zumindest einen Nutzdatenverbindung jeweils entweder eine Multiplexverbindung zuordnet oder für diese Nutzdatenverbindung einen Transport außerhalb einer Multiplexverbindung wählt und eine zweite Signalisierungsnachricht erzeugt und an der Schnittstelle abgibt, durch die die mögliche Zuordnung der zumindest einen Nutzdatenverbindung zu einer Multiplexverbindung angezeigt wird.

## Beschreibung

Die Erfindung betrifft ein Netzwerkelement (MSC-A) mit mindestens einer Schnittstelle, über die es mit einem zweiten Netzwerkelement (MSC-B) verbindbar ist.

Zur Übertragung von Sprachdaten über ein mobiles Kommunikationssystem bzw. Mobilfunksystem werden zunehmend paketorientierte Datenübertragungsverfahren eingesetzt, bei denen abhängig vom jeweils verwendeten Übertragungsprotokoll unterschiedliche Größen aufweisende Datenfelder zur Übertragung der komprimierten Sprachdaten bereitgestellt werden. Als Übertragungsprotokolle werden meist "Layer-2"-Übertragungsprotokolle wie beispielsweise das Ethernet-Protokoll, sowie das Internet Protokoll (IP)-Protokoll, das "User Datagram Protocol" (UDP)-Protokoll (RFC 768), das "Realtime Transport Protocol" (RTP)-Protokoll (RFC 3550) und in manchen Fällen auch das "Iu Framing Protocol" (IuFP)-Protokoll (3GPP TS 29.415) verwendet.

Beispielsweise wird in der so genannten CS-Domäne des Kernnetzes ("Core Network") eines Mobilfunksystems der dritten Generation (3GPP) zur Datenübertragung beispielsweise zwischen einer so genannten Media-Gateway-Einheit (MGWs) und/oder einem "Mobile Switching Center" (MSC) bzw. Mobilvermittlungseinheit eine so genannte "Nb"-Datenverbindung aufgebaut. Die zu übertragenden Sprach- oder Multimediadaten werden beispielsweise mittels einer "Adaptive Multi-Rate" (AMR) Sprachkodiereinheit komprimiert und anschließend die komprimierten Sprachdaten über das "Iu Framing Protocol" (IuFP)-Protokoll (3GPP TS 29.415) oder das RTP-, UDP- oder IP-Protokoll übertragen (siehe hierzu Standard 3GPP TS 29.414).

Die Datenfelder der jeweiligen Übertragungsprotokolls, also die jeweiligen "Header", sind zusammen häufig wesentlich größer als die darin übertragenen Daten, wie beispielsweise komprimierte Sprachdaten. Beispielsweise weist das Datenfeld eines IP-Datenpaketes eine Größe von 20 Byte (IP Version 4.0) bzw. 40 Byte (IP Version 6.0) auf. Die Datenfelder des UDP-Protokolls besitzen eine Größe von 8 Byte, wohingegen die Datenfelder des RTP-Protokolls 16 Byte und diejenigen des IuFP-Protokolls 4 Byte umfassen. Unterschiedlich hierzu weisen die über die AMR-Sprachkodiereinheit komprimierten Daten einer Größe von 35 Byte im "12.2 kHz"-Mode oder eine Größe von 5 Byte im zwischen Sprachpausen verwendeten "Silence Indication" (SID)-Mode auf.

Zwischen zumindest zwei Mobilvermittlungseinheiten oder zwei Media-Gateway-Einheiten werden in der Regel gleichzeitig mehrere Nutzdatenverbindungen, wie beispielsweise Telefonverbindungen übertragen, beispielsweise gemäß dem Standard für die so genannte NB Schnittstelle. Analog zur Nb-Schnittstelle kann die Datenübertragung über die ebenfalls in einem 3GPP Mobilfunksystem vorgesehenen "Iu"-Schnittstelle erfolgen, welche zwischen einer Media-Gateway-Einheit oder einer Mobilvermittlungseinheit und einer so genannten "Radio Network Controller" (RNC)-Einheit (siehe hierzu 3GPP TS 25.414 sowie 25.415) besteht.

Gemäß den derzeitig bestehenden Standards wird über die Nb- oder Iu-Schnittstelle für jedes zu übertragende Nutzdatenverbindung, beispielsweise für ein Telefongespräch eine eigene physikalische getrennte gemäß dem jeweiligen Übertragungsprotokoll IP/UDP/RTP-Datenverbindung realisierte Datenverbindung aufgebaut, über welche die gemäß dem jeweiligen IP-,UDP- und RTP-Übertragungsprotokoll aufgebaute Datenpakete übertragen werden.

Sowohl im Rahmen der Nb- als auch der Iu-Schnittstelle werden das IP-, UDP- und RTP-Protokoll jeweils an der angrenzenden Media-Gateway-Einheit und der angrenzenden Mobilvermittlungseinheit bzw. der angrenzenden RNC-Einheit terminiert, d.h. die Datenfelder der einzelnen über die Nb- oder Iu-Datenverbindung übertragenen Datenpakete weisen zumindest teilweise Übereinstimmungen auf und werden in den genannten Einheiten im Anschluss an die Übertragung ausgelesen und weiterverarbeitet. Unterschiedlich hierzu werden die Datenfelder von gemäß dem IuFP-Protokoll realisierten Datenpaketen durch die jeweilige Media-Gateway-Einheit oder Mobilvermittlungseinheit unverändert weitergereicht.

Ferner sind auf dem Gebiet der Übertragungstechnologie eine Vielzahl von Multiplextechnologien bekannt, über welche Daten von mehreren Nutzdatenverbindungen annähernd gleichzeitig mittels einer gemultiplexten Datenverbindung übertragen werden. Derartige zur Übertragung von mehreren Nutzdatenverbindungen bzw. Telefonverbindungen vorgesehene Datenverbindungen werden im Folgenden als Multiplexverbindungen bezeichnet.

An der Nb oder Iu Schnittstelle ist es vorteilhaft, Daten mehrere Nutzdatenverbindungen gemeinsam innerhalb einer vorzugsweise mittels der IP/UDP/RTP Protokolle transportierten Multiplexverbindung zu übertragen. Damit könnten in einem IP Packet, das jeweils nur einen IP, UDP und RTP Header enthält, Daten mehrerer Nutzdatenverbindungen enthalten sein, jeweils vorzugsweise mit eignem IuFP Header und eignen Nutzdaten wie beispielsweise komprimierten Sprachdaten. Dadurch könnte die nötige Bandbreite zum Transport erheblich verringert werden. Allerdings ist diese Möglichkeit noch nicht im Standard beschrieben.

Zum Aufbau einer Nutzdatenverbindung über eine Nb-Datenverbindung wird das so genannte "BICC IP Bearer Control Protocol" (IPBCP)-Protokoll (ITU-T Q.1970) vorgesehen, welches seinerseits das so genannte "Session Description Protocol" (SDP)-Protokoll (IETF RFC 2327) verwendet (siehe hierzu 3GPP TS 29.414). Das IPBCP-Protokoll sieht zum Aufbau einer Nutzdatenverbindung zwischen einer ersten und zweiten Media-Gateway-Einheit die Übertragung einer "IPBCP-Request-Nachricht" von der ersten zur zweiten Media-Gateway-Einheit vor. Durch die zweite Media-Gateway-Einheit wird diese Nachricht mittels einer "IPBCP-Response-Nachricht" beantwortet. Mittels der genannten IPBCP-Nachrichten tauschen die erste und zweite Media-Gateway-Einheit untereinander Ihre jeweiligen IP-Adressen und UDP-Port-Nummern aus, deren Kenntnis zum Austausch von Daten zwischen der ersten und zweiten Media-Gateway-Einheit erforderlich ist. Die IPBCP-Nachrichten werden mittels des so genannten BICC-Signalisierungsprotokolls (ITU-T Q.1902.1-5) transparent übertragen.

Die Aufgabe der Erfindung liegt darin, ein Netzwerkelement anzugeben, bei dem die zur Übertragung der Nutzdaten, beispielsweise Sprachdaten erforderliche Übertragungsbandbreite deutlich reduziert ist. Die Aufgabe wird ausgehend von dem Oberbegriff des Patentanspruches 1 durch dessen kennzeichnende Merkmale gelöst.

Der wesentliche Aspekt des erfindungsgemäßen Netzwerkelementes bzw. dessen zugeordnete Eigenschaften respektive Verfahren ist darin zu sehen, dass durch das erste Netzwerkelement eine erste Signalisierungsnachricht erzeugt und an das zweite Netzwerkelement übertragen wird, wobei durch die erste Signalisierungsnachricht dem zweiten Netzwerkelement die Bereitschaft des ersten Netzwerkelementes zum Transport der zumindest einen Nutzdatenverbindung über jeweils eine Multiplexverbindung angezeigt wird. Abhängig von der angezeigten Bereitschaft des ersten Netzwerkelementes und davon, ob der Transport der zumindest einen Nutzdatenverbindung über eine Multiplexverbindung durch das zweite Netzwerkelement unterstützt wird, ordnet das zweite Netzwerkelement jeder der zumindest einen Nutzdatenverbindungen jeweils entweder einer Multiplexverbindung zwischen dem ersten Netzwerkelement und dem zweiten Netzwerkelement zu oder wählt für diese Nutzdatenverbindung einen Transport außerhalb einer Multiplexverbindung. Durch eine im zweiten Netzwerkelement erzeugte und an das erste Netzwerkelement übertragene zweite Signalisierungsnachricht wird dem ersten Netzwerkelement die mögliche Zuordnung der zumindest einen Nutzdatenverbindung zu einer Multiplexverbindung angezeigt wird. Vorteilhaft ist es beim erfindungsgemäßen Verfahren nicht erforderlich, dass das die Zuordnung initiierende erste Netzwerkelement den Zielknoten der Nutzdatenverbindung kennt. Somit kann auch das standardisierte IPBCP-Protokoll, bei dem die von einem ersten Netzwerkelement übertragene IPBCP-Request-Nachricht meist ohne Kenntnis der diese empfangenden zweiten Netzwerkelement gesendet wird, oder das ebenfalls standardisierte SIP-Signalisierungsprotokoll um das erfindungsgemäße Verfahren erweitert werden. Durch den Aufbau der jeweiligen Nutzdatenverbindung über eine Multiplexverbindung können insbesondere komprimieret Sprachdaten mittels einer deutlich reduzierten Bandbreite übertragen werden.

Vorteilhaft ist es beim erfindungsgemäßen Netzwerkelement auch nicht erforderlich, neue Nachrichten im IPBCP Protokoll einzuführen, sondern die bestehenden Nachrichten müssen nur geeignet erweitert werden.

Weiterhin vorteilhaft ermöglicht das erfindungsgemäße Netzwerkelement wahlweise den Transport einer Nutzdatenverbindung zwischen einem ersten Netzwerkelement, das den Transport von Daten über eine Multiplexverbindung unterstützt, und einem zweiten Netzwerkelement, das gemäß bestehenden Standard nur den Transport von Nutzdatenverbindungen außerhalb von Multiplexverbindungen unterstützt.

Vorzugsweise berücksichtigt das zweite Netzwerkelement bei der Auswahl der Multiplexverbindung, ob in der Multiplexverbindung genug freie Ressourcen für die neue Nutzdatenverbindung vorhanden sind, wie beispielsweise eine freie Adressinformation für die Nutzdatenverbindung.

Falls das IPBCP-Protocoll verwendet wird, wird beim Aufbau jeder Nutzdatenverbindung gesondert eine so genannte IPBCP-Request-Nachricht und eine IPBCP-Response-Nachricht ausgetauscht. In der IPBCP-Request-Nachricht gibt das erste Netzwerkelement nach bestehendem Standard seine IP-Adresse sowie eine UDP Port Nummer an. Zur Angabe, dass der Transport einer Nutzdatenverbindung über eine Multiplexverbindung gewünscht wird, wird ein neue gebildetes SDP Attribut eingeführt. Alternativ wird ein neuer "MIME" Parameter für den in TS 29.414 definierten MIME-Type des IuFP-Protokolls verwendet.

Im Falle das das zweite Netzwerkelement den Transport von Nutzdatenverbindungen über Multiplexverbindungen nicht unterstützt, ignoriert das zweite Netzwerkelement gemäß bestehendem SDP-Standard das neue ihr unbekannte SDP Attribut bzw. den neuen MIME Parameter und richtet gemäß bestehendem IPBCP Standard eine einzeln transportierte Nutzdatenverbindung zur angegebenen IP Adresse und Port Nummer ein. Die nötige Abwärtskompatibilität ist somit gegeben.

Im Falle das das zweite Netzwerkelement zwar den Transport von Nutzdatenverbindungen über Multiplexverbindungen unterstützt, aber für die gegebene Nutzdatenverbindung entscheidet, kein Multiplexing anzuwenden, sendet das zweite Netzwerkelement ebenso eine IPBCP-Response-Nachricht gemäß bestehendem Standard ohne erfindungsgemäße Erweiterungen.

Ein zweite Netzwerkelement, das Multiplexing unterstützt, wählt beim Empfang der IPBCP-Request-Nachricht mit der Angabe, dass Multiplexing gewünscht ist, eine Multiplexverbindung hin zu der in der IPBCP-Request-Nachricht angegeben IP Adresse aus. Die Multiplexverbindung kann alternativ auch zu einem anderen Port als dem in der IPBCP-Request-Nachricht angegebenen Port führen.

Das zweite Netzwerkelement teilt dem ersten Netzwerkelement in der IPBCP-Response-Nachricht mit, dass Multiplexing gewählt wurde und gibt die ausgewählte Multiplexverbindung vorzugsweise mittels der UDP Port Nummer an, welche die zweite Netzwerkelement zum Empfang der Multiplexverbindung verwendet. Zur Angabe, dass Multiplexing gewählt wird, kann ein neues SDP Attribut verwendet werden, beispielsweise dasselbe neue SDP Attribut wie in der IPBCP-Request-Nachricht zur Angabe, dass Multiplexing gewünscht wird, verwendet wird. Alternativ wird zur Angabe, dass Multiplexing gewählt wird, ein neuer "MIME" Parameter für den in TS 29.414 definierten MIME Type des IuFP verwendet, beispielsweise der selbe neue Parameter wie in der IPBCP-Request-Nachricht. Die Angabe der zum Empfang der Multiplexverbindung verwendeten Port-Nummer in MGW-B kann innerhalb der die Nutzdatenverbindung beschreiben so genannten SDP "Media" Zeile erfolgen, oder aber mit Hilfe eines neuen SDP Attributs oder MIME Type Parameters.

Weiterhin vorteilhaft ermöglicht das erfindungsgemäße Netzwerkelement die Zuweisung einer eindeutige Kennung zur Nutzdatenverbindung innerhalb der Multiplexverbindung. Diese Kennung kann beispielsweise innerhalb der Datenpakete der Multiplexverbindung jeweils einem transportierten Datenpaket der Nutzdatenverbindung zugeordnet angegeben werden, um somit auszudrücken, zu welcher Nutzdatenverbindung das transportierte Datenpaket gehört.

Vorzugsweise weist das zweite Netzwerkelement nach Auswahl einer Multiplexverbindung der ihr neu zugeordneten Nutzdatenverbindung eine weitere Kennung zu, welche innerhalb der Multiplexverbindung eindeutig ist, und teilt für jede neu zugeordnete Nutzdatenverbindung die ausgewählte weitere Kennung dem ersten Netzwerkelement in der Nachricht mit, in der das zweite Netzwerkelement für jede Nutzdatenverbindung ausdrückt, ob und zu welcher Multiplexverbindung sie zugeordnet wird.

Diese Kennung kann dann beispielsweise innerhalb der Datenpakete der Multiplexverbindung jeweils einem transportierten Datenpaket der Nutzdatenverbindung zugeordnet angegeben werden, um somit auszudrücken, zu welcher Nutzdatenverbindung das transportierte Datenpaket gehört. Vorzugsweise wird hierbei für eine Nutzdatenverbindung dieselbe Kennung sowohl für von dem ersten Netzwerkelement zum zweiten Netzwerkelement gesandte Datenpakete wie für von zweiten Netzwerkelement zum ersten Netzwerkelement gesandte Datenpakete verwendet.

Für SDP, wie bei IPBCP verwendet, erfolgt die Angabe der Kennung vorzugsweise mit Hilfe eines neuen SDP Attributs oder MIME Type Parameters, beispielsweise des Attributs bzw. Parameters, welcher ausdrückt, dass Multiplexing verwendet wird. Vorteilhaft wird sobald eine Nutzdatenverbindung beendet wird, die bisher für diese Nutzdatenverbindung verwendete Kennung einer anderen der Multiplexverbindung neu zugeordneten Nutzdatenverbindung zugewiesen. Um zu vermeiden, dass dieselbe Kennung zufällig gleichzeitig von dem ersten und zweiten Netzwerkelement unterschiedlichen neuen Nutzdatenverbindungen innerhalb der selben Multiplexverbindung zugewiesen wird, ist es vorteilhaft, wenn dem ersten und zweiten Netzwerkelement unterschiedliche Wertebereiche zur Vergabe der Kennung zugeteilt bekommen. Beispielsweise kann dasjenige Netzwerkelement, welches zuerst einer neuen Multiplexverbindung eine Nutzdatenverbindung zuweist, dadurch den unteren Wertebereich zugewiesen bekommen, während das andere Netzwerkelement, der von Netzwerkelment über die Zuordnung dieser Nutzdatenverbindung eine Nachricht erhält, mittels dieser Nachricht den oberen Wertebereich zugewiesen bekommt.

Daneben wird durch das erfindungsgemäße Netzwerkelement vorteilhaft die Einrichtung neuer Multiplexverbindungen unterstützt, insbesondere dann wenn noch keine für die Nutzdatenverbindung geeignete bestehende Multiplexverbindung vorhanden ist. Ein derartiges automatisches und dynamisches Einrichten von Multiplexverbindungen vereinfacht den Betrieb eines Kommunikationssystems erheblich.

Entsprechend ist es beim Erhalt der Nachricht von ersten Netzwerkelement, welches eine Adresse enthält und ausdrückt, dass die Zuordnung von Nutzdatenverbindung(en) zu einer oder mehreren Multiplexverbindung(en) gewünscht ist, vorteilhaft, wenn das zweite Netzwerkelement im Falle, dass noch keine geeignete Multiplexverbindungen zur angegebenen Adresse vorhanden ist oder aber in den bestehenden Nutzdatenverbindungen keine Ressourcen mehr vorhanden sind, eine neue Multiplexverbindung zur angegebenen Adresse aufgebaut und den Nutzdatenverbindungen zuweist.

Vorzugsweise erfolgt der Aufbau der neuen Multiplexverbindung dadurch, dass das zweite Netzwerkelement in der Nachricht an das erste Netzwerkelement eine bisher noch nicht vorhandene Multiplexverbindung bezeichnet, beispielsweise mittels einer bisher noch nicht verwendeten UDP Port Nummer des zweiten Netzwerkelementes. das erste Netzwerkelement erkennt beim Empfang der Nachricht des zweiten Netzwerkelementes daran, dass ein neuer Adressinformation verwendet wird, dass eine neue Multiplexverbindung verwendet wird. Vorzugsweise gibt zuvor das erste Netzwerkelement in der Nachricht an das zweite Netzwerkelement eine freie UDP Port Nummer des ersten Netzwerkelementes an, und das zweite Netzwerkelement verwendet diese UDP Port Nummer, um Daten in einer neu aufgebauten Multiplexverbindung an das erste Netzwerkelement zu senden. Wenn das zweite Netzwerkelement eine bereits bestehende Multiplexverbindung auswählt, verwendet das zweite Netzwerkelement dagegen eine andere Portnummer des ersten Netzwerkelementes, die bereits vorher dieser Multiplexverbindung zugeordnet war. Vorzugsweise wird eine Multiplexverbindung abgebaut, sobald die letzte darin transportierte Nutzdatenverbindung beendet wird.

Die Vorliegende Erfindung ist auch für andere Netze geeignet, die das so genannte "Session Initiation Protocol" -Protokoll (IETF RFC 3261) als Signalisierung Vorsehen, und bei denen zwischen denselben Netzwerkelementen viele Nutzdatenverbindungen ausgetauscht werden, wie zum Beispiel das so genannte "Internet Multimedia Subsystem" (IMS), in der von ETSI TISPAN standardisierten Weise genützt wird. Zur Beschreibung der Nutzdatenverbindungen wird auch hier das SDP-Protokoll verwendet, das gemäß dem so genannten "SDP-offer-answer" Mechanismus (IETF RFC 3264) mittels einer so genannten SDP-offer-Nachricht und einer darauf folgenden SDP-answer-Nachricht ausgetauscht wird, die mit der IPBCP-Request- bzw. IPBCP-Response-Nachricht vergleichbar sind.

Weitere vorteilhafte Ausbildungen des erfindungsgemäßen Verfahrens sind den weiteren Patentansprüchen zu entnehmen.

Im Folgenden wird das erfindungsgemäße Verfahren an einem Ausführungsbeispiel sowie mehreren Figuren näher erläutert.
Es zeigen:
- Fig. 1: beispielhaft in einem schematischen Blockschaltbild die zur Ausführung des erfindungs-
- Fig. 2: gemäßen Verfahrens zusammenwirkenden Netzkomponenten eines mobilen Kommunikationssystems, beispielhaft in schematischer Darstellung den Aufbau eines Datenpaketes einer erfindungsgemäßen Multiplexverbindung,
- Fig. 3: beispielhaft in schematischer Darstellung einen alternativen Aufbau eines Datenpaketes einer erfindungsgemäßen Multiplexverbindung und
- Fig. 4: beispielhaft in einem schematischen Blockschaltbild die Netzarchitektur eines IMS basierten Kommunikationssystems.

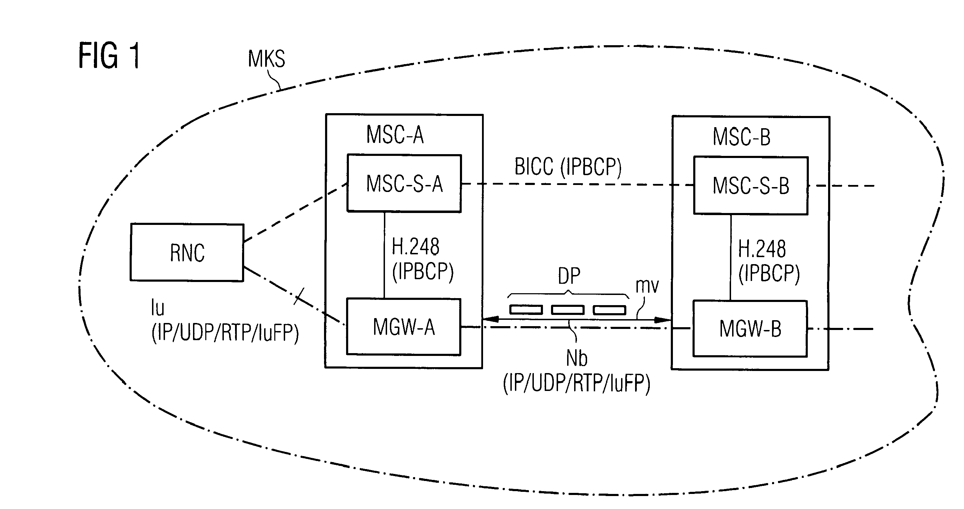

In Figur 1 ist beispielhaft in einem schematischen Blockschaltbild ein erstes Netzwerkelement, insbesondere ein Netzknoten MSC-A und ein zweites Netzwerkelement, insbesondere ein Netzknoten MSC-B eines mobilen Kommunikationssystems MKS dargestellt, wobei der erste und zweite Netzknoten MSC-A, MSC-A in einer bevorzugten Ausführungsform als Mobilvermittlungseinheiten ausgebildet sind.

Der erste Netzknoten MSC-A weist beispielsweise bei dem in Figur 1 dargestellten Ausführungsbeispiel eine erste MSC-Server-Einheit MSC-S-A und eine erste Media-Gateway-Einheit MGW-A auf. Analog hierzu weist der zweite Netzknoten MSC-B eine zweite MSC-Server-Einheit MSC-S-B und eine zweite Media-Gateway-Einheit MGW-B auf. Die mittels getrennter Einheiten, und zwar der ersten und zweiten MSC-Server-Einheit MSC-S-A sowie der ersten und zweiten Media-Gateway-Einheit MGW-A, MGW-B realisierten Server- und Media-Gateway-Funktionalitäten können alternativ auch jeweils in einer gemeinsamen Einheit realisiert sein.

Der erste und zweite Netzknoten MSC-A, MSC-B bzw. dessen erste und zweite Media-Gateway-Einheit MGW-A, MGW-B sind im vorliegenden Ausführungsbeispiel über die eine "Nb"-Schnittstelle miteinander verbunden, die zur Übertragung von Datenpaketen DP einer aufzubauenden Nutzdatenverbindung das IP-, UDP-, RTP- und IuFP-Protokoll verwendet.

Erfindungsgemäß wird an der "Nb"-Schnittstelle zumindest eine Multiplexverbindungen mv zur Übertragung von zumindest einer Nutzdatenverbindung vorgesehen. Ferner besteht eine BICC-Signalisierungsverbindung zwischen der ersten und zweiten MSC-Server-Einheit MSC-S-A, MSC-S-B, wobei die erste und zweite MSC-Server-Einheit MSC-S-A, MSC-S-B über eine auf dem ITU-T H.248-Protokoll basierende Signalisierungsverbindung mit der ersten bzw. zweiten Media-Gateway-Einheit MGW-A, MGW-B verbunden ist und diese hierüber kontrolliert. Sowohl durch die BICC-Signalisierungsverbindung als auch durch die H.248-Signalisierungsverbindung wird das "BICC IP Bearer Control Protocol" (IPBCP)-Protokoll unterstützt.

Darüber hinaus ist der erste Netzknoten MSC-A bzw. die erste MSC-Server-Einheit MSC-S-A und die erste Media-Gateway-Einheit MGW-A mittels der so genannten "Iu"-Schnittstelle bzw. einer "Iu"-Datenverbindung mit einer "Radio-Network-Controller" (RNC)-Einheit verbunden. Auch durch die Iu-Datenverbindung wird zur Übertragung der Datenpaketes einer Nutzdatenverbindung das IP-, UDP-, RTP- und IuFP-Protokoll verwendet.

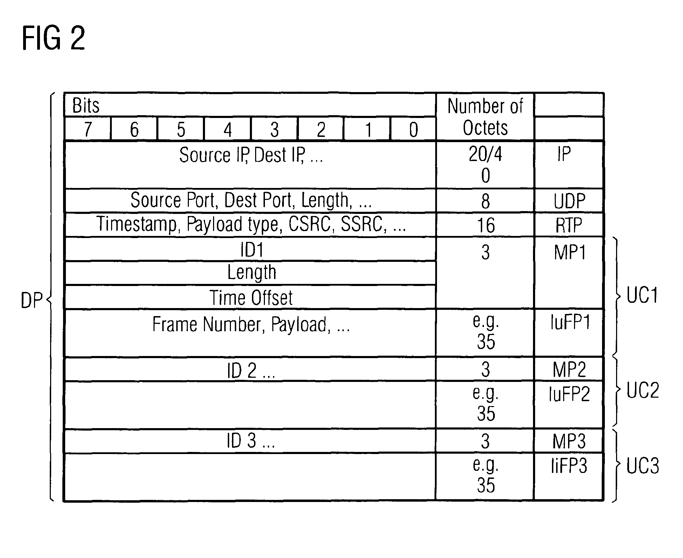

In Figur 2 ist beispielhaft der Aufbau eines Datenpaketes DP einer erfindungsgemäßen Multiplexverbindung mv dargestellt, welche beispielsweise über die Nb-Datenverbindung bzw. Nb-Schnittstelle übertragen wird. Das Datenpaket DP ist zur Multiplexdatenübertragung von beispielsweise einer ersten bis dritten Nutzdatenverbindungen UC1, UC2, UC3 vorgesehen.

Das Datenpaket DP weist hierzu lediglich jeweils ein IP-, UDP- und RTP-Datenfeld IP, UDP, RTP auf, wohingegen die Nutzdaten der ersten bis dritten Nutzdatenverbindungen UC1, UC2, UC3 jeweils in einem getrennt voneinander angeordneten Datenfeld IuFP1 bis IuFP3 übertragen werden, das jeweils vorzugsweise Daten des IuFP sowie die Nutzdaten der ersten, zweiten, bzw. dritten Nutzdatenverbindung UC1, UC2, UC3, enhält. Die Nutzdaten können jeweils beispielsweise gemäß dem AMR-Verfahren kodierte Sprachinformationen sein.

Vorzugsweise wird für jede Nutzdatenverbindung UC1 bis UC3 auch jeweils ein Multiplexdatenfeld MP1, MP2, MP3 eingefügt, das zumindest eine erste bis dritte Kennung ID1, ID2, ID3, die innerhalb der Multiplexverbindung die jeweilige Nutzdatenverbindung UC1, UC2 bzw. UC3 bezeichnet, sowie ggf. weitere Informationen hinsichtlich der Länge der jeweils übertragenen Nutzdaten und/oder ein Zeitstempel enthalten. Auch können ein erstes bis drittes IuFP-Datenfeld IuFP1, IuFP2, IuFP3 vorgesehen sein

Im Folgenden wird beispielhaft eine mittels des "Session Description Protocol" (SDP)-Protokolls enkodierte IPBCP-Request-Nachricht und IPBCP-Response-Nachricht näher beschrieben, welche beispielsweise zwischen den in Abbildung 1 dargestellten ersten und zweiten Netzknoten MSC-A, MSC-B, insbesondere zwischen der ersten und zweiten Media-Gateway-Einheit MGW-A, MGW-B ausgetauscht werden.

### IPBCP-Request-Nachricht (MGW-A -> MGW-B):

- Rq1: c=IN IP4 **host.anywhere.com**
- Rq2: m=audio **49170** RTP/AVP 97
- Rq3: a=rtpmap:97 VND.3GPP.IUFP/16000
- Rq4: a=fmtp:97 **multiplex**

### IPBCP-Response-Nachricht(MGW-B -> MGW-A) :

- Rp1: c=IN IP4 **host.example.com**
- Rp2: m=audio **49320** RTP/AVP 97
- Rp3: a=rtpmap:97 VND.3GPP.IUFP/16000
- Rp4: a=fmtp:97 **multiplex; user_connection_id=11**

Die IPBCP-Request-Nachricht wird in der ersten Media-Gateway-Einheit MGW-A des ersten Netzknotens MSC-A erzeugt und an die zweite Media-Gateway-Einheit MGW-B des zweiten Netzknotens MGW-B übertragen. Durch die in vierten Zeile Rq4 der IPBCP-Request-Nachricht angegebenen Multiplexkennung "multiplex" des MIME-Types des IuFP-Protokolls wird durch die erste Media-Gateway-Einheit MGW-B der zweiten Media-Gateway-Einheit MGW-B angezeigt, dass die Zuordnung der in der IPBCP-Request-Nachricht angegebenen Nutzdatenverbindung zu einer Multiplexverbindung mv gewünscht wird.

In der ersten Zeile Rq1 der IPBCP-Request-Nachricht wird durch die erste Media-Gateway-Einheit MGW-A eine dieser zugeordnete Adressinformation, beispielsweise dessen IP Adresse wie "host.anywhere.com" angegeben, zu der die Multiplexverbindung geführt werden soll.

In der zweiten Zeile Rq2 der IPBCP-Request-Nachricht wird durch die erste Media-Gateway-Einheit MGW-A eine in der ersten Media-Gateway-Einheit MGW-A angeordnete freie Port-Nummer angegeben, beispielsweise "49170", welche zum Aufbau einer zum Anfragezeitpunkt noch nicht bestehenden Multiplexverbindung mv verwendet werden kann, aber auch gemäß bestehendem Standard zum Aufbau einer Nutzdatenverbindung außerhalb einer Multiplexverbindung.

Ist keine Multiplexkennung "multiplex" in der vierten Zeile Rq4 der IPBCP-Request-Nachricht vorgesehen, werden standardkonform die angegebene IP-Adresse sowie Port-Nummer zum Aufbau einer einfachen, d.h. nicht gemultiplexten Nutzdatenverbindung vorgesehen. In der ersten Media-Gateway-Einheit MGW-A wird bereits berücksichtigt, dass die zweite Media-Gateway-Einheit MGW-B möglicherweise den mittels die Multiplexkennung "multiplex" angezeigten Zuordnungswunsch nicht unterstützt bzw. nicht entspricht, und die übertragenen IP-Adresse und Port-Nummer zum Aufbau einer einfachen, nicht gemultiplexten Nutzdatenverbindung zur ersten Media-Gateway-Einheit MGW-A verwendet.

Nach Empfang der IPBCP-Request-Nachricht wird durch die zweite Media-Gateway-Einheit MGW-B erfindungsgemäß eine Multiplexverbindung mv zu der empfangenen IP-Adresse "host.anywhere.com" die Port-Nummer der gewünschten Multiplexverbindung in der zweiten Media-Gateway-Einheit MGW-B zugeordnet, beispielsweise die Multiplexverbindung mit der Port-Nummer "49320".

In einer bevorzugten Ausführungsform wird durch die erste und zweite Media-Gateway-Einheit MGW-B der aufzubauenden Nutzdatenverbindung eine Kennung innerhalb der zugeordneten Multiplexverbindung mv zugeordnet - im vorliegenden Ausführungsbeispiel die Kennung "11". Um zu vermeiden, dass dieselbe Kennung zufällig gleichzeitig von der ersten und zweiten Media-Gateway-Einheit MGW-A, MGW-B unterschiedlichen neuen Nutzdatenverbindungen innerhalb derselben Multiplexverbindung zugewiesen wird, werden der ersten und zweiten Media-Gateway-Einheit MGW-A, MGW-B vorzugsweise unterschiedliche Wertebereiche für die Zuweisung der Kennung zugeteilt. Beispielsweise kann diejenige Media-Gateway-Einheit MGW-B, die zuerst einer neuen Multiplexverbindung eine Nutzdatenverbindung zuweist, dadurch den unteren Wertebereich zugewiesen bekommen, während die andere Media-Gateway-Einheit MGW-A den oberen Wertebereich zugewiesen bekommt.

Wird durch die zweite Media-Gateway-Einheit MGW-B festgestellt, dass zur gewünschten IP-Adresse "host.anywhere.com" noch keine Multiplexverbindung mv vorhanden ist, so baut diese mittels einer IPBCP-Response-Nachricht eine neue Multiplexverbindung mv zur IP-Adresse "host.anywhere.com" und der angegebenen Port-Nummer "49170" in der ersten Media-Gateway-Einheit MGW-A auf. In diesem Fall ist die zugeordnete Port-Nummer "49320" eine bisher in der zweiten Media-Gateway-Einheit MGW-B unbenutzte Port-Nummer.

Wird dagegen eine bestehende Multiplexverbindung mv ausgewählt, dann entspricht die zugeordnete Port-Nummer "49320" der zweiten Media-Gateway-Einheit MGW-B der Port-Nummer der bestehenden Multiplexverbindung mv, der in der ersten Media-Gateway-Einheit MGW-A die Port-Nummer "49170" zugewiesen ist.

Die durch die zweite Media-Gateway-Einheit MGW-B ermittelten Informationen zum Aufbau der Nutzdatenverbindung werden mittels der IPBCP-Response-Nachricht der ersten Media-Gateway-Einheit MGW-A angezeigt.

Beispielsweise wird mittels der in der vierten Zeile Rp4 der IPBCP-Response-Nachricht angegebenen Multiplexkennung "multiplex" des MIME-Types des IuFP-Protokols der ersten Media-Gateway-Einheit MGW-A angezeigt, dass die in der IPBCP-Response-Nachricht beschriebenen Nutzdatenverbindung zu einer Multiplexverbindung mv zugeordnet wurde. Durch den zusätzlich übermittelten Parameter "user_connection_id" mit dem Wert "11" wird der ersten Media-Gateway-Einheit MGW-A der von der zweiten Media-Gateway-Einheit MGW-B der Nutzdatenverbindung zugeordnete Kennung innerhalb der Multiplexverbindung mv mitgeteilt.

In der ersten Zeile Rp1 der IPBCP-Response-Nachricht wird die durch die zweite Media-Gateway-Einheit MGW-B zugeordnete IP-Adresse beispielsweise "host.example.com" angegeben, zu der die Multiplexverbindung mv führt.

In der zweiten Zeile Rp2 der IPBCP-Response-Nachricht wird die durch die zweite Media-Gateway-Einheit MGW-B zugeordnete Port-Nummer "49170" angegeben, an die die Multiplexverbindung mv in der zweiten Media-Gateway-Einheit MGW-B geführt ist. Indirekt bezeichnet diese damit auch die ausgewählte Multiplexverbindung mv. Auch kann die zweite Media-Gateway-Einheit MGW-B die erste Media-Gateway-Einheit MGW-A durch Angabe einer bisher nicht verwendeten Port-Nummer veranlassen, eine neue Multiplexverbindung mv aufzubauen.

Eine fehlende Multiplexkennung "multiplex" in der vierten Zeile Rp4 der IPBCP-Response-Nachricht zeigt der ersten Media-Gateway-Einheit MGW-A an, dass zum Aufbau der Nutzdatenverbindung keine Multiplexverbindung mv verwendet wird, sondern diese analog zum derzeitig standardisiert Verfahren mittels der übertragenen IP-Adresse und der zugehörigen Port-Nummer eine einfache, nicht gemultiplexte Nutzdatenverbindung aufgebaut wird. Eine IPBCP-Response-Nachricht ohne Multiplexkennung "multiplex" würde auch von einer bisher standardisierten Media Gateway einheit MGW-2 gesendet, die die Multiplexkennung "multiplex" in der vierten Zeile Rq4 der IPBCP-Request-Nachricht nicht versteht und daher ignoriert und nur den Transport von Nutzdatenverbindungen außerhalb von Multiplexverbindungen unterstützt.

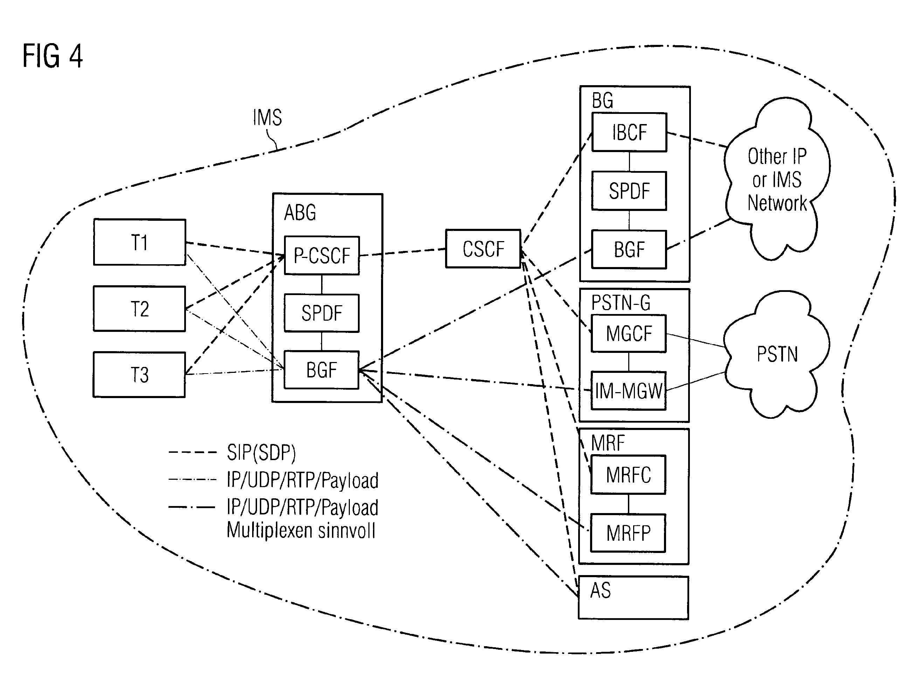

Zur Erläuterung eines alternativer Anwendungsfall für das erfindungsgemäße Verfahren ist in Figur 4 in vereinfachter Darstellung in einem schematischen Blockschaltbild die Netzarchitektur eines "Internet Multimedia Subsystem" (IMS)-basiertes bzw. IMS-Kommunikationssystem IMS dargestellt, welches bereits durch den Standardisierungsbody "Telecoms & Internet converged Services & Protocols for Advanced Networks" (TISPAN) standardisierte Erweiterungen sowie verwendete Protokolle aufweist.

Das IMS-Kommunikationssystem IMS weist beispielsweise erste bis dritte Kommunikationsendgeräte T1 bis T3 auf, welche jeweils das "Session Initiation Protocol" (SIP)-Protokoll SIP unterstützen. Die erste bis dritte Kommunikationsendgeräte T1 bis T3 sind über das SIP-Protokoll SIP (SDP) mit einer so genannten "Access Boarder Gateway" (ABG)-Einheit ABG verbunden und hierdurch an das SIP-Kernnetz angeschlossen.

Gemäß dem durch TISPAN festgelegten Standard werden die der ABG-Einheit ABG standardgemäß zugeordneten Funktionen durch mehrere miteinander verbundene Netzwerkelemente realisiert, und zwar einer so genannten "Proxy Call Session Control Function" (P-CSCF)-Einheit P-CSCF, einer "Service-based Policy Decision Function" (SPDF)-Einheit SPDF und einer "Boarder Gateway Function" (BGF)-Einheit BGF. Hierbei wird basierend auf den SIP-Signalisierungdaten durch die P-CSCF-Einheit P-CSCF die SPDF- Einheit SPDF kontrolliert, welche Ihrerseits wiederum die BGF-Einheit BGF steuert.

Im IMS-Kommunikationssystem IMS können auch so genannte "Application Server" (AS)-Einheiten vorgesehen sein, die ausgewählte Applikationen wie beispielsweise einen "Push-To-Talk"-Kommunikationsdienst zur Verfügung stellen.

Ferner können "Media Ressource Functions" (MRF)-Einheiten MRF vorgesehen werden, welche als Konferenzbrücke dienen und aus zwei Netwerkelementen aufgebaut sind, und zwar einer so genannten MRF-Controller (MRFC)-Einheit MRFC und einer so genannten MRF-Processor (MRFP)-Einheit MRFP.

Ferner kann das IMS-Kommunikationssystem IMS mittels einer "Boarder Gateway"-(BG)-Einheit BG mit anderen IP- oder IMS-Kommunikationssystemen verbunden sein. Die BG-Einheit BG weist hierzu eine "Interconnection Boarder Control Function" (IBCF)-Einheit IBCF, eine SPDF-Einheit SPDF und eine BGF-Einheit BGF auf.

Mittels einer "PSTN Gateway" (PSTN-G)-Einheit PSTN-G kann das IMS-Kommunikationssystem IMS mit einem "Public Switched Telephone Network" PSTN verbunden werden. Diese weist hierzu eine "Media Gateway Control Function" (MGCF)-Einheit MGCF sowie eine "Internet Multimedia Mediagateway" (IM-MGW)-Einheit IM-MGW auf.

Die SIP-Signalisierung wird im IMS-Kommunikationssystem IMS durch eine "Call Session Control Functions" (CSCF)-Einheit CSCF weitergereicht, wobei das erste bis dritte Kommunikationsendgerät T1 bis T3 über die P-CSCF-Einheit P-CSCF und diese wiederum über die CSCF-Einheit CSCF mit jeweils der IBCF-, MGCF-, MRFC- und AS-Einheit IBCF, MGCF, MRFC, AS SIP-Signalisierungsdaten austauschen, die über das SDP-Protokoll übertragen werden.

Zum Transport von Nutzdaten zwischen den ersten bis dritten Kommunikationsendgerät T1 bis T3, den BGF-Einheiten BGF, der IM-MGW-Einheit IM-MGW, der MRFP-Einheit MRFP und der AS-Einheit AS sind diese mittels dem RTP-, UDP- und IP-Protokoll RTP, UDP, IP miteinander verbunden. Neben den Nutzdaten wird auch das in RFC 3550 standardisierte "Real Time Control Protocol" (RTCP)-Protokoll übertragen. Unterschiedlich zu dem in Figur 1 dargestellten Ausführungsbeispiel der 3GPP CS Domäne wird das IuFP-Protokoll im IMS-Kommunikationssystem IMS nicht verwendet. Jedoch ist auch hier zu erwarten, dass zwischen zwei Netzelementen des IMS-Kernnetzes (jeweils BGF, IM-MGW, MRFP oder AS) viele Nutzdatenverbindungen nahezu gleichzeitig übertragen werden, welche die Bereitstellung einer hohen Bandbreite erfordern. Um Bandbreite einsparen zu können, bietet das Vorsehen von Multiplexverbindungen zur Übertragung von mehreren ähnliche Attribute aufweisenden Nutzdatenverbindungen an.

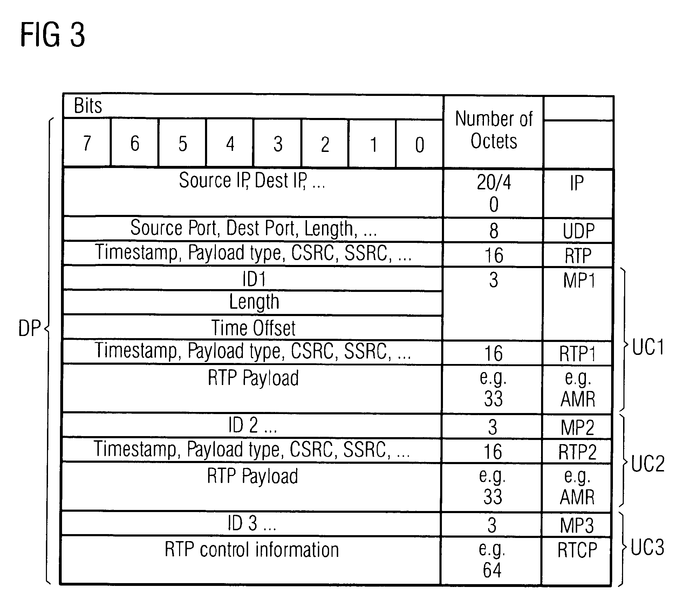

In Figur 3 ist beispielsweise der Aufbau eines Datenpaketes DP einer Multiplexverbindung mv dargestellt zeigt das mögliche Format eines gemultiplexten Datenpakets, wie es beispielsweise an den in Figur 4 angedeuteten Schnittstellen vorgesehen sein könnte. Der Aufbau entspricht weitgehend dem in Figur 2 dargestellten Aufbau. Unterschiedlich hierzu wird jedoch an Stelle der IuFP-Datenfelder IuFP1 bis IuFP3 das RTP-Protokoll unterstützende RTP-Datenfelder RTP1 bzw RTP2 vorgesehen. Dies ist insbesondere aufgrund der als Ende-zu-Ende-Verbindung realisierten Nutzdatenverbindungen erforderlich, um eine Wiederherstellung der Nutzdaten unmittelbar in der Enkodereinheit oder Dekodereinheit beispielsweise im jweiligen Kommunikationsendgerät T1 bis T3 vorsehen zu können.

Neben der gemäß dem RTP-Protokoll übertragenen Nutzdatenverbindungen können auch zugeordnete RTCP-Kontrollverbindungen in einem Datenfeld des gemultiplexten Datenpaketes DP vorgesehen sein. Hierzu wird dieser analog zu den übrigen Nutzdatenverbindung eine Kennung ID3 zugewiesen.

Ferner ist im Header des gemultiplexten Datenpaketes DP ebenfalls ein RTP-Datenfeld RTP vorgesehen. In dem RTP-Datenfeld RTP übertragenen Daten können beispielsweise Informationen über Jitter und Paketverluste auf der Übertragungsstrecke gewonnen werden, welche zwischen den einzelnen Netzelementen im Kernnetz (jeweils BGF, IM-MGW, MRFP oder AS) vorliegen können.

Im Folgenden wird beispielhaft der Aufbau einer "SDP-Offer-Nachricht" und einer "SDP-Answer-Nachricht" gemäß dem Standard IETF RFC 3264 erläutert, welche beispielsweise über das SIP-Signalisierungsprotokoll SIP zwischen beispielsweise zwei Netzwerkelemente bzw. Knotenelementen des IMS-Kernnetzes IMS ausgetauscht werden und die erfindungsgemäße Erweiterungen enthalten.

Als Knotenelemente können beispielsweise die AS-Einheit AS, die BGF-Einheit BGF, die ABG-Einheit ABG, die PSTN-G-Einheit PSTN-G oder eine MRF-Einheit MRF vorgesehen sein. Es wird beispielsweise der in Figur 3 dargestellte Aufbau eines gemultiplexten Datenpaketes DP verwendet.

Unterschiedlich zu dem zuvor beschriebenen Aufbau der IPBCP-Nachrichten dient der im Folgenden dargestellte Nachrichtenaustausch zusätzlich zur Zuordnung der zur Übertragung genützten Kodierverfahren und kann auf mehrere Nutzdatenverbindungen bezogen sein.

### SDP-Offer-Nachricht (Knoten-A -> Knoten-B) :

- 01: c=IN IP4 **host.anywhere.com**
- 02: m=audio **49170** RTP/AVP **98** 3 96 97
- 03: a=rtpmap:98 VND.3GPP.IUFP/16000
- 04: a=fmtp:98 **multiplex**
- 05: a=rtpmap:97 AMR
- 06: a=fmtp:97 mode-set=0,2,5,7; mode-change-period=2
- 07: a=rtpmap:96 telephone-event

### SDP-Answer-Nachricht (Knoten-B -> Knoten-A):

- A1: c=IN IP4 **host.example.com**
- A2: m=audio **49320** RTP/AVP **98**
- A3: a=rtpmap:98 VND.3GPP.IUFP/16000
- A4: a=fmtp:98 multiplex; **rtp_payload_types=96,97; user_connection_id=11; rtcp_connection_id=12;**
- A5: a=rtpmap:97 AMR
- A6: a=fmtp:97 mode-set=0,2,5,7; mode-change-period=2
- A7: a=rtpmap:96 telephone-event

Die "SDP-Offer-Nachricht" wird hierzu von ersten Netzknoten Knoten-A an den zweiten Netzknoten Knoten-B übertragen. Beispielsweise werden in der zweiten Zeile 02 der SDP-Offer-Nachricht unterschiedliche Kodierverfahren, und zwar "GSM-FR", "AMR" sowie "Telephone Event" angegeben. Diese Kodierverfahren werden durch den RTP-Parameter "payload types" durch die Zuordnung der Werte "3", "96" und "97" in der zweiten Zeile 02 der SDP-Offer-Nachricht eingetragen. Die mittels weiterer in der fünften, sechsten und siebten Zeile 05, 06 und 07 vorgesehenen Parameter gemäß dem standardisierten SDP-Protokoll weiter beschrieben werden. Daneben wird in der zweiten Zeile 02 als RTP-Payload-Type der Wert "98" zugewiesen, welcher das gemultiplexte IuFP-Protokoll angibt und das mittels der in dritten und vierten Zeile 03, 04 vorgesehener weiterer Parameter näher beschrieben wird.

Durch den in der vierten Zeile 04 angegebenen Parameter "multiplex" des MIME-Types des IuFP-Protokolls wird durch den die SDP-Offer-Nachricht erzeugenden ersten Netzknoten Knoten-A dem zweiten Netzknoten Knoten-B angezeigt, dass dieser die Zuordnung der in der zweiten Zeile 02 beschriebenen Nutzdatenverbindung(en) zu einer Multiplexverbindung wünscht.

In der ersten Zeile O1 der SDP-Offer-Nachricht wird durch den ersten Netzknoten Knoten-A die diesem zugeordnete IP-Adresse beispielsweise "host.anywhere.com" angezeigt, an welche die Multiplexverbindung mv geführt werden soll.

In der zweiten Zeile 02 der SDP-Offer-Nachricht wird durch den ersten Netzknoten Knoten-A eine diesem zugeordnete freie Port-Nummer beispielsweise die "49170" angegeben, welche für den Aufbau einer neuen Multiplexverbindung verwendet werden könnte. Ist in der SDP-Offer-Nachricht kein "multiplex"-Parameter enthalten, so sind - analog zu dem zuvor beschriebenen Verfahren - die angegebene IP-Adresse und Port-Nummer zum Aufbau einer einfachen, nicht gemultiplexten Nutzdatenverbindung vorzusehen. Falls eine Unterstützung einer Multiplexübertragung und/oder des RTP Payload Types durch das IuFP-Protokoll im zweiten Netzknoten Knoten-B nicht vorgesehen ist, dann kann ebenfalls die IP-Adresse und Port-Nummer für zum Aufbau einer einfachen, nicht gemultiplexten Nutzdatenverbindung zum ersten Netzknoten Knoten-A erfolgen.

Nach Auswertung der SDP-Offer-Nachricht wählt der zweite Netzknoten Knoten-B erfindungsgemäß eine Multiplexverbindung zur IP-Adresse "host.anywhere.com" aus, beispielsweise die Multiplexverbindung mit der Port-Nummer "49320" im zweiten Netzknoten Knoten B.

Der zweite Netzknoten Knoten-B wählt ferner aus den mittels der SDP-Offer-Nachricht angezeigten Kodierverfahren beispielsweise "AMR" und "Telefone event" (RTP payload types 96 und 97) aus. Zusätzlich wird durch dem zweiten Netzknoten Knoten-B in der der Nutzdatenverbindung eine erste Kennung beispielsweise "11" und der zugeordneten RTCP-Verbindung einen weitere Kennung zur Kennzeichnung der Nutzdatenverbindungen beispielsweise "12" zugewiesen.

Für den Fall, dass noch keine Multiplexverbindung zur angegebenen IP-Adresse "host.anywhere.com" besteht, wird diese mittels der SDP-Answer-Nachricht zum zweiten Netzknoten Knoten-B , und zwar zur IP-Adresse "host.anywhere.com" und zur Port-Nummer "49170" im ersten Netzknoten Knoten-A aufgebaut. In diesem Fall ist der Port mit der Nummer "49320" ein bisher von zweiten Netzknoten Knoten-B unbenutzter Port ausgebildet. Bei der Auswahl einer bereits bestehenden Multiplexverbindung mv gibt die Port-Nummer "49320" den im zweiten Netzknoten Knoten-B der Multiplexverbindung mv zugeordnete Port-Nummer und die Port-Nummer "49170" die im ersten Netzknoten Knoten-A dieser Multiplexverbindung bereits zugeordneten Port-Nummer an.

Der zweite Netzknoten Knoten-B erzeugt erfindungsgemäß eine die SDP-Answer-Nachricht und überträgt diese an den ersten Netzknoten Knoten-A, wobei diese folgende Informationen enthält.

In der zweiten Zeile A2 der SDP-Answer-Nachricht wird der ausgewählte RTP-Payload-Type für das IuFP-Protokoll, und zwar beispielsweise "98" und in der vierten Zeile A4 der Parameter "multiplex" des MIME-Types des IuFP-Protokolls angegeben, wodurch dem ersten Netzknoten Knoten-A mitgeteilt mit, dassdie in der SDP Medienzeile A2 beschriebenen Nutzdatenverbindungen zu einer Multiplexverbindung mv zugeordnet ist.

Durch den in vierten Zeile A4 angegebenen Parameter "rtp_payload_types" des MIME-Types des IuFP-Protokoll wird dem ersten Netzknoten Knoten-A durch den zweiten Netzknoten Knoten-B die für diese Nutzdatenverbindung ausgewählten RTP Payload Types beispielsweise "96" für das AMR-Kodierungsverfahren und 97 für das "Telefone-event"-Kodierungsverfahren angezeigt. Die genannten RTP Payload Types werden in der fünten bis siebten Zeile 05 bis 07 näher definiert.

In der vierten Zeile A4 wird der Parameter "user_connection_id" des MIME-Types des IuFP-Protokolls eingefügt, welcher dem ersten Netzknoten Knoten-A anzeigt, dass die in zweiten Zeile A2 beschriebene Nutzdatenverbindung die erste Kennung beispielsweise "11" zugewiesen ist. Durch den in dervierten Zeile A4 angegebenen Parameter "rtcp_connection_id" des MIME-Types des IuFP-Protokolls wird dem ersten Netzknoten Knoten-A angezeigt, dass die in der in zweiten Zeile A2 beschriebene Nutzdatenverbindung zugeordneten RTCP-Verbindung die zweite Kennung beispielsweise "12" zugewiesen ist.

In der ersten Zeile A1 wird die dem zweiten Netzknoten Knoten-B zugeordnete IP-Adresse beispielsweise "host.example.com" zugeordnet, über welche die Multiplexverbindung mv führt und in der zweiten Zeile A2 die Port-Nummer, beispielsweise "49170", angegeben, an welcher die über die Multiplexverbindung übertragenen Datenpakete DP empfangen werden.

Hierbei kann der zweite Netzknoten Knoten-B durch Verwendung einer bisher unbelegten Port-Nummer den ersten Netzknoten Knoten-A anweisen, eine neue Multiplexverbindung hierzu aufzubauen. Falls der "multiplex" Parameter nicht in der SDP-Answer-Nachricht vorgesehen ist, können die übertragenen IP-Adresse und Port-Nummer zum Aufbau einer einfachen, nicht gemultiplexten Nutzdatenverbindung verwendet werden.

Der erste und zweite Netzknoten Knoten-A, Knoten-B können wie in Figur 4 dargestellt jeweils aus einer für die SIP-Signalisierung zuständigen Steuereinheit, beispielsweise der P-CSCF-, IBCF-, MGCF- oder MRFC-Einheit P-CSCF, IBCF, MGCF, MRFC, und einer für die Nutzdatenverbindungen zuständigen Prozessoreinheit, beispielsweise der BGF-, IM-MGW-, oder MRFP-Einheit BGF, IM-MGW, MRFP, zusammengesetzt sein. Prozessoreinheit und Steuereinheit kommunizieren miteinander jeweils beispielsweise gemäß dem ITU-T H.248-Standards. In einer bevorzugten Ausführungsform ist die Prozessoreinheit für die Verwaltung der Multiplexverbindungen mv sowie der Zuteilung der Adressinformationen der Nutzdatenverbindungen zuständig.

Vor der Übertragung der SDP-offer-Nachricht tauschen die Steuereinheit und die Prozessoreinheit des jeweiligen Netzknotens Knoten-A, Knoten-B gemäß bestehenden Standard untereinander Nachrichten aus. Die Prozessoreinheit teilt der Steuereinheit insbesondere seine IP-Adresse beispielsweise "host.anywhere.com" sowie die ihm zugewiesene Port-Nummer beispielsweise "49170" mit. Die Signalisierung wird ferner dahingehen erweitert, dass durch die Prozessoreinheit gegenüber der Steuereinheit angezeigt wird, dass diese den Einsatz einer Multiplexverbindung wünscht. Beispielsweise kann hierzu der RTP-Payload in das IuFP-Protokoll gemäß der zweiten bis vierten Zeilen 02 bis 04 über eine ausgewählte H.248-Nachricht von der Prozessoreinheit an die Steuereinheit übertragen werden.

Zwischen Empfang der SDP-Offer-Nachricht und Senden der SDP-Answer-Nachricht werden zwischen der Steuereinheit und der Prozessoreinheit des jeweiligen Netzknotens Knoten-A, Knoten-B gemäß bestehenden Standard Nachrichten ausgetauscht. Beispielsweise teilt die Prozessoreinheit darin bereits die in der SDP-Offer-Nachricht empfangene IP-Adresse sowie die empfangene Portnummer mit. In einer bevorzugten Ausführungsform wird der Prozessoreinheit durch die Steuereinheit auch signalisiert, dass Multiplexing gewünscht ist. Diese erfolgt beispielsweise durch Weiterreichen des RTP-Payloads für das IuFP-Protokoll gemäß der zweiten bis vierten Zeilen 02 bis 04 mittels einer geeigneten H.248-Nachricht.

Durch die Prozessoreinheit wird daraufhin die Multiplexverbindung ausgewählt und der Nutzdatenverbindungen die zugehörige Kennung zugewiesen. Die Prozessoreinheit teilt der Steuereinheit bereits seine IP-Adresse und die ihm zugewiesene Port-Nummer mit.

Falls sich eine SPDF zwischen Steuereinheit und Prozessoreinheit befindet, reicht diese die beschriebenen Informationen jeweils weiter.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- ABG: Access Boarder Gateway-Einheit
- AN1: erstes Zugangsnetz
- AN2: zweites Zugangsnetz
- AS: Application Server-Einheiten
- BG: Boarder Gateway-Einheit
- BGF: Boarder Gateway Function-Einheit
- IBCF: Interconnection Boarder Control Function-Einheit
- ID1: erste Adressinformation
- ID2: zweite Adressinformation
- ID3: dritte Adressinformation
- IM-MGW: Internet Multimedia Mediagateway-Einheit
- IMS: IMS basierten Kommunikationssystem
- IP: IP-Datenfeld
- Iu: Iu-Datenverbindung
- IuFP1: erstes IuFP-Datenfeld
- IuFP2: zweites IuFP-Datenfeld
- IuFP3: drittes IuFP-Datenfeld
- KAT1: erstes mobiles Kommunikationsendgerät
- KBT2: zweites mobiles Kommunikationsendgerät
- MKS: mobiles Kommunikationssystem
- MGCF: Media Gateway Control Function-Einheit
- MGW-A: erste Media-Gateway-Einheit
- MGW-B: zweite Media-Gateway-Einheit
- MGW-T: dritte Media-Gateway-Einheit
- MKD: Kommunikationsdienst
- MKD: multimediadatenbasierter Kommunikationsdienst
- MP1: erstes Multiplexdatenfeld
- MP2: zweites Multiplexdatenfeld
- MP3: drittes Multiplexdatenfeld
- MRF: Media Ressource Functions-Einheiten
- MRFC: MRF-Controller-Einheit
- MRFP: MRF-Processor-Einheit
- MSC-A: erste Mobilvermittlungseinheit
- MSC-B: zweite Mobilvermittlungseinheit
- MSC-S-A: erste MSC-Server-Einheit
- MSC-S-B: zweite MSC-Server-Einheit
- mv: Multiplexverbindungen
- Nb: Nb-Datenverbindung
- P-CSCF: Proxy Call Session Control Function-Einheit
- PSTN: Public Switched Telephone Network
- PSTN-G: PSTN Gateway-Einheit
- RAB: RAB-Parameter
- RNC: Radio-Network-Controller-Einheit
- RTP: RTP-Datenfeld
- SIP: Session Initiation Protocol-Protokoll
- SPDF: Service-based Policy Decision Function-Einheit
- T3: drittes Kommunikationsendgerät
- UC1: ersten Nutzdatenverbindung
- UC2: zweite Nutzdatenverbindung
- UC3: dritte Nutzdatenverbindung
- UDP: UDP-Datenfeld

## Patentansprüche

1. Netzwerkelement (MSC-A) mit mindestens einer Schnittstelle, über die es mit einem zweiten Netzwerkelement (MSC-B) verbindbar ist,
**dadurch gekennzeichnet,**
**dass** das Netzwerkelement (MSC-A) derart ausgestaltet ist, dass eine erste Signalisierungsnachricht erzeugbar und an der Schnittstelle abgebbar ist, mit der eine Bereitschaft zum Transport mindestens einer Nutzdatenverbindung über mindestens eine Multiplexverbindung (mv) angezeigt wird;
**dass** bei Empfang einer ersten Signalisierungsnachricht das Netzwerkelement (MSC-A) jeder der zumindest einen Nutzdatenverbindung jeweils entweder eine Multiplexverbindung (mv) zuordnet oder für diese Nutzdatenverbindung einen Transport außerhalb einer Multiplexverbindung wählt und
eine zweite Signalisierungsnachricht erzeugt und an der Schnittstelle abgibt, durch die die mögliche Zuordnung der zumindest einen Nutzdatenverbindung zu einer Multiplexverbindung (mv) angezeigt wird.

2. Netzwerkelement (MSC-A) nach Anspruch 1,
**dadurch gekennzeichnet,**
**dass** die erste Signalisierungsnachricht eine Multiplexkennung enthält.

3. Netzwerkelement (MSC-A) nach einem der Ansprüche 1 oder 2,
**dadurch gekennzeichnet,**
**dass** die erste Signalisierungsnachricht eine dem Netzwerkelement (MSC-A) zugeordnete erste Adressinformation enthält.

4. Netzwerkelement (MSC-A) nach Anspruch 3,
**dadurch gekennzeichnet,**
**dass** das Netzwerkelement (MSC-A) eine Multiplexverbindung mit Hilfe der in der ersten Signalisierungsnachricht enthaltenen ersten Adressinformation auswählt.

5. Netzwerkelement (MSC-A) nach einem der Ansprüche 1 bis 4,
**dadurch gekennzeichnet,**
**dass** bei mehreren zum Aufbau der Nutzdatenverbindung verfügbaren Multiplexverbindungen durch das Netzwerkelement (MSC-A) eine Multiplexverbindung zugeordnet wird, welche ausreichend freie Übertragungsressourcen für den Transport der Nutzdatenverbindung aufweist.

6. Netzwerkelement (MSC-A) nach einem der Ansprüche 1 bis 5,
**dadurch gekennzeichnet,**
**dass** durch eine im Netzwerkelement (MSC-A) vorgenommene Zuordnung einer Multiplexverbindung (mv) der dynamische Aufbau dieser Multiplexverbindung veranlasst wird.

7. Netzwerkelement (MSC-A) nach Anspruch 1 bis 6,
**dadurch gekennzeichnet,**
**dass** der neu dynamisch aufgebauten Multiplexverbindung (mv) zum Empfang von Daten auf Seiten des Netzwerkelement (MSC-A) eine in der ersten Signalisierungsnachricht enthaltene UDP Port-Nummer zugewiesen wird, und dass einer bereits bestehenden Multiplexverbindung eine bereits vorher zugewiesene UDP-Port-Nummer zugewiesen bleibt.

8. Netzwerkelement (MSC-A) nach Anspruch 1 bis 7,
**dadurch gekennzeichnet,**
**dass** die Zuordnung der zumindest einen Nutzdatenverbindung zu einer Multiplexverbindung dem Netzwerkelement (MSC-A) mittels einer in der zweiten Signalisierungsnachricht vorgesehenen Multiplexkennung angezeigt wird.

9. Netzwerkelement (MSC-A) nach Anspruch 1 bis 8,
**dadurch gekennzeichnet,**
**dass** in der zweiten Signalisierungsnachricht die zugeordnete Multiplexverbindung (mv) vorzugsweise mittels einer UDP-Port-Nummer angezeigt wird.

10. Netzwerkelement (MSC-A) nach einem der Ansprüche 1 bis 9,
**dadurch gekennzeichnet,**
**dass** durch das Netzwerkelement (MSC-A) der einer Multiplexverbindung (mv) zugeordneten Nutzdatenverbindung eine Kennung zugeordnet wird.

11. Netzwerkelement (MSC-A) nach Anspruch 10,
**dadurch gekennzeichnet,**
**dass** die Kennung in der zweiten Signalisierungsnachricht enthalten ist.

12. Netzwerkelement (MSC-A) nach Anspruch 10 oder 11,
**dadurch gekennzeichnet,**
**dass** die Kennung jeweils in einem Datenfeld eines Datenpaktes (DP) der Multiplexverbindung (mv) enthalten ist.

13. Netzwerkelement (MSC-A) nach einem der Ansprüche 1 bis 12,
**dadurch gekennzeichnet,**
**dass** das Netzwerkelement (MSC-A) eine BICC Signalisierungsverbindung unterstützt,
**dass** eine IPBCP-Request-Nachricht und eine IPBCP-Response-Nachricht als erste und zweite Signalisierungsnachrichten erzeugbar sind.

14. Netzwerkelement (MSC-A) nach einem der Ansprüche 10 bis 13,
**dadurch gekennzeichnet,**
**dass** als Multiplexkennung ein "Session Description Protocol" (SDP)-Attribut oder ein gemäß dem Standard TS 29.414 ausgebildeter "Multimedia Internet Message Extension" (MIME)-Parameter enthalten ist.

15. Netzwerkelement (MSC-A) nach einem der Ansprüche 1 bis 14,
**dadurch gekennzeichnet,**
**dass** eine SDP-Offer-Nachricht und eine SDP-Answer-Nachricht erzeug- und abgebbar sind.
